# EUROPÄISCHE PATENTSCHRIFT

(11) **EP 1 778 997 B1**
(45) Veröffentlichungstag und Bekanntmachung des Hinweises auf die Patenterteilung: **09.12.2009**
(21) Anmeldenummer: 05771866.0
(22) Anmeldetag: 09.08.2005
(51) Int. Cl.: F16D 65/097, F16D 65/18

(54) **ELEKTROMECHANISCH ODER PNEUMATISCH BETÄTIGBARE SCHEIBENBREMSE, INSBESONDERE FÜR EIN NUTZFAHRZEUG**
ELECTROMECHANICALLY OR PNEUMATICALLY OPERABLE DISC BRAKE, PARTICULARLY FOR A GOODS-CARRYING VEHICLE
FREIN A DISQUE A ACTIONNEMENT ELECTROMECANIQUE OU PNEUMATIQUE, NOTAMMENT POUR VEHICULE UTILITAIRE

(30) Priorität: 12.08.2004 DE 102004039141
(43) Veröffentlichungstag der Anmeldung: 02.05.2007
(73) Patentinhaber: KNORR-BREMSE Systeme für Nutzfahrzeuge GmbH, 80809 München (DE)
(72) Erfinder: GANZHORN, Dirk, 84034 Landshut (DE); BAUMGARTNER, Johann, 85368 Moosburg (DE); TRIMPE, Robert, 82234 Wessling (DE); PAHLE, Wolfgang, 83707 Bad Wiessee (DE)
(74) Vertreter: Mattusch, Gundula
(86) Internationale Anmeldenummer: PCT/EP2005/008620
(87) Internationale Veröffentlichungsnummer: WO 2006/018181

(56) Entgegenhaltungen:
- WO-A-2004/013510
- DE-A1- 4 324 988
- US-A- 3 771 625
- US-B1- 6 336 531

## Beschreibung

Die vorliegende Erfindung betrifft eine elektromechanisch oder pneumatisch betätigbare Scheibenbremse, insbesondere für ein Nutzfahrzeug, gemäß dem Oberbegriff des Anspruchs 1.

Aus der WO 02/14 708 ist eine Scheibenbremse bekannt, die als Schiebesattel-, Schwenksattel- und/oder Festsattelbremse mit feststehender oder beweglicher, insbesondere verschiebbarer Bremsscheibe ausgebildet sein kann.

Bei einer Bremsung erfolgt eine Betätigung der Zuspannvorrichtung, bei welcher im Falle einer Festsattelbremse zunächst der zuspannseitige Bremsbelag gegen die Bremsscheibe und dann die bewegliche Bremsscheibe gegen den reaktionsseitigen Bremsbelag gedrückt wird.

Dabei wird der zuspannseitige Bremsbelag durch einen oder vorzugsweise zwei an diesen angreifende Bremskolben verschoben, die andererseits in Funktion als Nachstellkolben Bestandteil von Nachstelleinrichtungen sind, mit denen ein Lüftspiel zwischen den Bremsbacken und der Bremsscheibe einstellbar ist. Nachstelleinrichtungen auf beiden Seiten der Bremsscheibe verringern den Weg, den Scheibe und/oder Sattel beweglich zu überbrücken haben, da der Verschleißweg allein über die Nachstelleinrichtungen ausgeglichen werden kann.

In der WO 2004/013510 A2 ist ebenfalls eine Scheibenbremse entsprechend dem Oberbegriff des Anspruchs 1 gezeigt und beschrieben, bei der der Bremskolben über eine Blattfeder mit der zugeordneten Bremsbacke verbunden ist, wobei die Blattfeder einen gebildeten Steg in einer Ausnehmung der Bremsbacke hintergreift.

In den gattungsgemäßen Druckschriften sind die ein- oder beidseitigen Nachstelleinrichtung vorzugsweise elektromechanisch angetrieben, wobei der Elektromotor so ausgelegt ist, dass die Bremskolben mit Druckstücken zur Bremsscheibe hin und von dieser weg bewegen kann.

Insbesondere aufgrund der vielfach sehr rauen Betriebsbedingungen, unter denen die Scheibenbremsen zum Einsatz kommen, kann deren Funktionsfähigkeit unter Umständen eingeschränkt sein, das heißt, die Betriebsbereitschaft ist nicht in jedem Fall und unter jeder Bedingung in optimaler Weise gegeben.

Zu den sich ergebenden Problemen gehört das nicht immer gewährleistete Lösen der Bremsbeläge von der Bremsscheibe, insbesondere dann, wenn die Bremsbeläge beispielsweise durch Korrosion mit der Bremsscheibe sozusagen verbacken sind.

Neben dem dadurch bedingten sehr hohen Verschleiß der Bremsscheibe und/oder der Bremsbeläge kann ohne entsprechende Gegenmaßnahmen u.U. auch die Funktionssicherheit der Scheibenbremse leiden.

Dabei können die Haftkräfte, mit denen die Bremsbeläge korrosionsbedingt an der Bremsscheibe anhaften, so groß sein, dass selbst die Rückstellkraft des Elektromotors der Nachstelleinrichtung nicht ausreicht für ein Ablösen der Bremsbeläge von der Bremsscheibe.

Aber auch im Fall, dass sich die Bremsbeläge von der Bremsscheibe lösen, ist ein definiertes Lösen, insbesondere dann, wenn die Bremsscheibe wie bei einer Festsattelbremse axial beweglich gelagert ist, gewünscht. Aufgrund der undefinierten Position der Bremsscheibe und/oder des Bremssattels bei einer Schiebesattelbremse kann ein Schleifen der Bremsbeläge an der Bremsscheibe nicht vollständig vermieden werden.

Naturgemäß führt dies zu einem erhöhten Verschleiß sowohl der Bremsbeläge wie auch der Bremsscheibe, was einer optimalen Standzeit der Scheibenbremse entgegensteht.

Darüber hinaus führt der aufgrund der Reibung der entsprechenden Bauteile in ungebremster Stellung auftretende erhöhte Fahrwiderstand zu einem zusätzlichen Kraftstoffverbrauch, der einer gewünschten Minimierung von Betriebskosten entgegensteht.

Der vorliegenden Erfindung liegt daher die Aufgabe zugrunde, eine Scheibenbremse der gattungsgemäßen Art so weiter zu entwickeln, dass ihre Betriebssicherheit verbessert wird.

Diese Aufgabe wird durch eine Scheibenbremse mit den Merkmalen des Anspruchs 1 gelöst.

Durch die Erfindung wird erreicht, dass sich die Bremskolben nebst Druckstücken in jedem Fall begrenzt von den Bremsbacken lösen können, also auch dann, wenn die Rückstellkräfte des Elektromotors der Nachstelleinrichtung nicht ausreichen die fest an der Bremsscheibe anhaftende Bremsbacke zu lösen.

Im ungünstigsten Fall kommt es zu einer schleifenden Anlage der Bremsbacke an der Bremsscheibe, jedoch keinesfalls zu einer Situation, in der ein Lösen der Bremskolben von der Bremsscheibe verhindert wird.

Üblicherweise reichen die beim normalen Fahrbetrieb auftretenden Erschütterungen aus, um eine Trennung der Bremsbacke zu erreichen. Hierzu gehört natürlich ihre Zurückstellung, die eine freie Bewegbarkeit in abgewandter Richtung zur Bremsscheibe erfordert und die nun gegeben ist.

Für eine störungsfreie, das heißt, "normale" Funktion liegt der dem Federelement zugeordnete Bremskolben unter Vorspannung des Federelementes an der Bremsbacke an, so dass sich eine sozusagen elastische Verbindung zwischen dem Bremskolben und der Bremsbacke ergibt, die lediglich in einem bestimmten maßlichen Bereich gelöst wird, wenn die Rückstellkräfte des Elektromotors nicht ausreichen, um die Bremsbacke aus ihrer Reibposition zu lösen.

Dabei ist das Federelement, vorzugsweise eine als Blattfeder ausgebildete Klammerfeder so dimensioniert, dass die Federkraft geringer ist als die Rückstellkräfte des die Bremskolben antreibenden Elektromotors.

Zur Begrenzung des Rückstellweges des Bremskolbens ist vorzugsweise ein mechanisches Rückzugsgesperre vorgesehen, das den Hub des Elektromotors begrenzt, so dass ein Maximalwert des Lüftspiels nicht überschritten wird, da ansonsten die Bremse unwirksam sein könnte.

Um die Funktionsfähigkeit des Rückzugsgesperres nicht zu beeinträchtigen, liegt das Federelement vorzugsweise bei einem Nichtlösen der Bremsbacke von der Bremsscheibe nach Überwindung der Vorspannkraft durch die Rückstellung des Elektromotors an einem Anschlag an oder bildet selbst einen wegbegrenzenden Anschlag aus, dessen Abstand zum Federelement in Normalstellung bestimmt ist vom maximal zulässigen Lüftspiel. Da der Federweg durch den Anschlag begrenzt ist, ist die Verstellbarkeit des Bremskolbens nebst Druckstück gleichfalls begrenzt, wobei dieses maximale Lüftspielmaß zwischen dem Bremskolben und der Bremsbacke dem zwischen der Bremsbacke bzw. deren Reibfläche und der Bremsscheibe in dem Fall entspricht, dass die Bremsbacke einwandfrei von der Bremsscheibe gelöst ist.

Nach einer vorteilhaften Weiterbildung der Erfindung kann ein an einem ortsfesten Bauteil angeordneter Anschlag vorgesehen sein, an dem die Bremsscheibe und/oder der Bremssattel unter elastischer Vorspannung im gelösten Zustand der Bremse anliegen.

Dadurch wird gewährleistet, dass beim Lösen der Zuspannvorrichtung zwangsweise durch die elastische Kraft ein Freispiel zwischen den Bremsbacken und der Bremsscheibe entsteht, wodurch ein Schleifen der Bremsscheibe an den Bremsbacken während einer Fahrt mit der Folge eines höheren Verschleißes und Kraftstoffverbrauchs verhindert wird.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Scheibenbremse in einer geschnittenen, schematischen Seitenansicht
- Figur 2: eine Einzelheit der Scheibenbremse in einer schematischen Seitenansicht
- Figur 3: einen vergrößerten Ausschnitt gemäß der Linie III in Figur 2
- Figur 4: die Einzelheit nach Figur 2 in einer dazu unterschiedlichen Betriebsposition der Scheibenbremse
- Figur 5: zur Verdeutlichung der Erfindung ein Diagramm
- Figur 6: eine weitere Einzelheit der Scheibenbremse ebenfalls in einer schematischen Seitenansicht

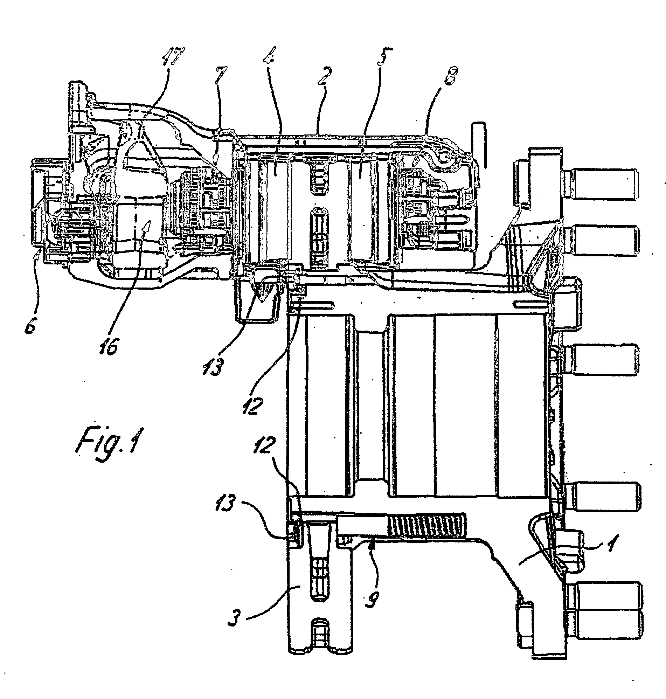

In der Figur 1 ist eine hier beispielhaft als Festsattelbremse ausgebildete Scheibenbremse für Nutzfahrzeuge dargestellt, die einen als Festsattel ausgebildeten Bremssattel 2 aufweist, der eine Bremsscheibe 3 übergreift, die axial verschiebbar und verdrehgesichert auf einem als Achsflansch 1 ausgebildeten Fahrzeugteil angeordnet ist, an dem auch der Bremssattel 2 unbeweglich fixiert ist.

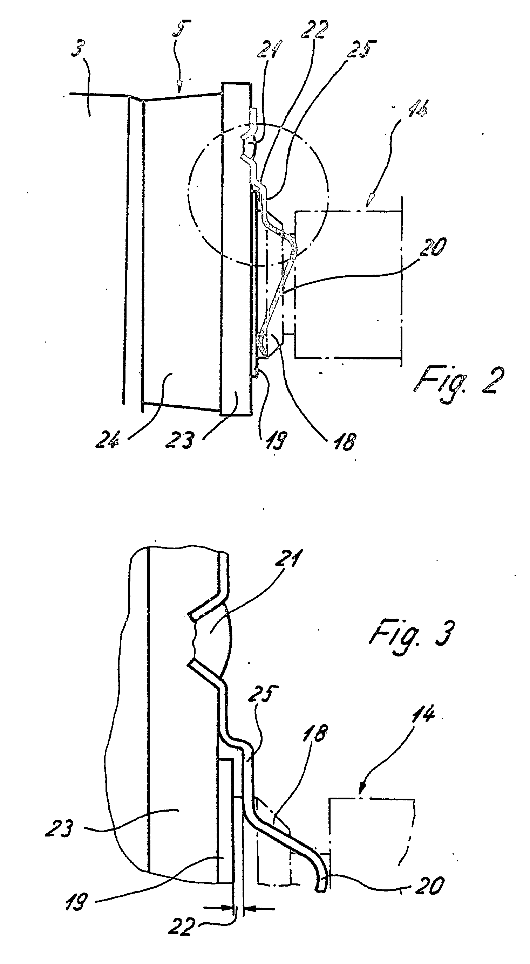

Im Bremssattel 2 ist eine von einer Kolbenstange eines Bremszylinders betätigbare Zuspannvorrichtung 16 mit einem im Bremssattel 1 exzentrisch gelagerten Drehhebel 17 angeordnet, die derart ausgelegt und konstruiert ist, dass bei einem Verschwenken des Drehhebels 17 die Bremskolben 14 über angeschlossene Druckstücke 18 (Figur 2) auf dieser Seite der Bremsscheibe 3 (Zuspannseite genannt) parallel zur Bremsscheibenachse verschoben werden und eine zuspannseitig angeordnete Bremsbacke 4 gegen die Bremsscheibe 3 pressen. Bei weiter fortschreitender Zuspannbewegung axial in Richtung der weiteren, anderen Seite (Reaktionsseite) der Bremsscheibe 3 bewegt sich diese, bis sie dort zur Anlage kommt und die eigentliche Bremswirkung zwischen der Bremsscheibe 3 und den Bremsbacken 4, 5 einsetzt. Durch die reibende Anlage beider Bremsbacken 4, 5 (aus Belagträgerplatte und Belagmaterial) werden die Bremsscheibe 3 und mit ihr der Achsflansch 1 bzw. die daran angeschlossene Radnabe und ein nicht dargestelltes Rad abgebremst.

Beiden Bremsbacken 4, 5 sind jeweils zuspannseitig und reaktionsseitig wenigstens eine, insbesondere je zwei Nachstellvorrichtungen 7, 8 zugeordnet, mit denen ein betriebsbedingter Verschleiß der Bremsbacken 4, 5 ausgleichbar ist, das heißt, beispielsweise nach jedem oder mehreren Bremsvorgängen erfolgt eine Zustellung der Bremsbacken 4, 5 in Richtung der Bremsscheibe 3 um die Abriebdicke.

Die Nachstellvorrichtungen sind elektromechanisch angetrieben, wobei auf jeder Seite der Bremsscheibe 3 jeweils ein Elektromotor 6 vorgesehen ist, der über eine Antriebsverbindung auf die dann als Nachstellkolben fungierenden Bremskolben 14 einwirkt, die bei einem Verdrehen die axiale Position der Druckstücke 18 relativ zur Bremsscheibe 3 verändern.

Wie in den Figuren 2 bis 4 deutlich erkennbar ist, sind die Bremskolben 14 (oder diesen zugeordneten Druckstücke) mittels eines in Verschieberichtung auslenkbaren Federelementes 20 in Form einer Klammerfeder an der zugeordneten Bremsbacke 4, 5 gehalten, wobei das Federelement 20 durch einen Niet 21 fest mit der Bremsbacke 5 verbunden ist und zwar an einer Belagträgerplatte 23, die einen die Bremsscheibe 3 in Bremsstellung kontaktieren Bremsbelag 24 trägt. Das Federelement 20 liegt unter Vorspannung an einer Druckplatte 19 an, die an dem Druckstück 18 befestigt ist.

In den Figuren 2 und 3 ist die Bremsbacke 5 gegen die Bremsscheibe 3 gedrückt unter Anlage der Druckplatte 19 an der Belagträgerplatte 23.

Das Federelement 20 ist so ausgebildet, dass es in einem einen Randbereich der Druckplatte 19 teilweise überdeckenden Bereich als wegbegrenzender Anschlag 25 wirkt, der in "Normalstellung" abständig zu der Druckplatte 19 verläuft, wobei dieser Abstand das mit dem Bezugszeichen 22 versehene Lüftspiel bildet.

Durch Rückstellung der Bremskolben 14 werden die zugeordneten Bremsbacken 4, 5 aus ihrer Anlagestellung mit der Bremsscheibe 3 gebracht. Dabei reicht die Vorspannung der des Federelementes 20 aus, um die für die Rückstellung der Bremsbacken 4, 5 notwendige Kraft zu übertragen. Sollte jedoch die jeweilige Bremsbacke 4, 5 beispielsweise durch Korrosion so an der Bremsscheibe 3 anhaften, dass die Rückstellkräfte des Elektromotors nicht ausreichen, um die Bremse zu lösen, so hebt der Bremskolben 14 mit der angeschlossenen Druckplatte 19 von der Bremsbacke 4, 5 unter Überwindung der Vorspannkraft des Federelementes 20 ab.

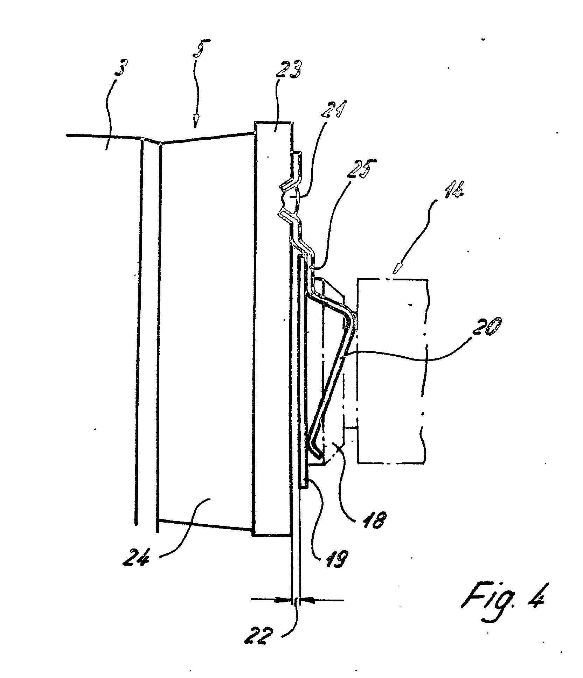

Zur Begrenzung des Rückhubes über ein durch das maximale Lüftspiel 22 definiertes Maß hinaus, liegt in einer Endstellung die Druckplatte 19 an dem Anschlag 25 an, wie dies in der Figur 4 dargestellt ist. Zwar schleift hierbei der Bremsbelag 24 weiterhin an der Bremsscheibe 3, jedoch aufgrund der Lösung der Bremskolben 14 drucklos, so dass ein Heißlaufen der Scheibenbremse verhindert wird.

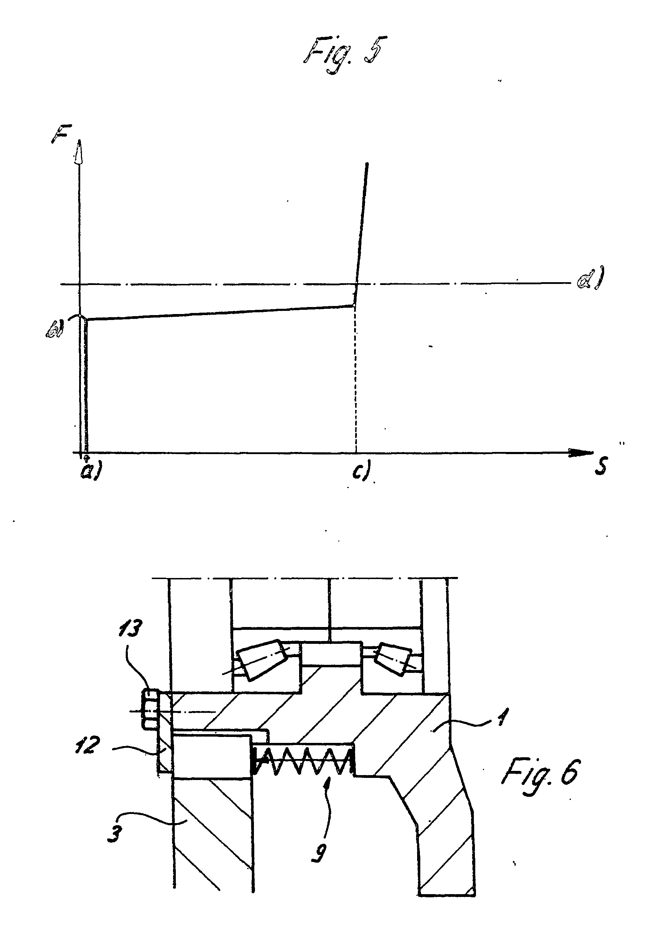

In dem in der Figur 5 dargestellten Diagramm ist die beschriebene Begrenzung der Auslenkung des Federelementes 20 bzw. die Abhängigkeit des Lüftspiels 22 zur Kraft des Federelementes 20 dargestellt. Dabei gibt die Abszisse das Maß S des Lüftspiels an, während an der Ordinate die Kraft F des Federelementes angelegt ist. Im Punkt a) ist die Blockierposition dargestellt, bei Punkt b) die Vorspannkraft des Federelementes 20. Bei c) ist das maximal zulässige Lüftspiel erkennbar und auf der Linie d) die maximale Rückholkraft der Nachstellvorrichtung bzw. des Elektromotors.

Um zu gewährleisten, dass die Bremsscheibe 3 nach Beendigung des Bremsvorganges in ihre Ausgangsposition zurückgeschoben wird, so dass zwischen der äußeren Bremsbacke 5 und der Bremsscheibe 3 ein ausreichendes Lüftspiel entsteht, sind, wie in Figur 6 erkennbar, in Verschieberichtung der Bremsscheibe 3 federnde Druckelemente 9 vorgesehen, an denen die Bremsscheibe 3 anliegt.

Die durch die Druckelemente 9 bedingte Verschiebung der Bremsscheibe wird begrenzt durch feststehende Anschläge 12, die durch den Achsflansch 1 eingedrehte Schrauben 13 gehalten sind.

### Bezugszeichenliste

- 1: Achsflansch
- 2: Bremssattel
- 3: Bremsscheibe
- 4: Bremsbacke
- 5: Bremsbacke
- 6: Zuspannvorrichtung
- 7: Nachstellvorrichtung
- 8: Nachstellvorrichtung
- 9: Druckelement
- 12: Anschlag
- 13: Schraube
- 14: Bremskolben
- 16: Zuspannvorrichtung
- 17: Drehhebel
- 18: Druckstück
- 19: Druckplatte
- 20: Federelement
- 21: Niet
- 22: Lüftspiel
- 23: Belagträgerplatte
- 24: Bremsbelag
- 25: Anschlag

## Patentansprüche

1. Elektromechanisch oder pneumatisch betätigbare Scheibenbremse, insbesondere für ein Nutzfahrzeug, mit
- einem eine Bremsscheibe (3) übergreifenden Bremssattel (2),
- einer am Bremssattel (2) angeschlossenen Zuspanneinrichtung (6) zum Zuspannen der Bremse mittels wenigstens einem oder mehreren Bremskolben (14), die jeweils an Bremsbeläge (24) aufweisenden Bremsbacken (4, 5) anliegen,
- wenigstens einer elektromechanisch antreibbaren Nachstelleinrichtung (7, 8) zum Einstellen eines Lüftspiels zwischen den Bremsbacken (4, 5) und einer Bremsscheibe (3),
- wobei zum Betrieb der Nachstelleinrichtung (7, 8) ein Elektromotor mit den zugeordneten Bremskolben (14) in Wirkverbindung steht, und
- der Bremskolben (14) und/oder ein Druckstück (18) durch ein Federelement (2) an der zugeordneten Bremsbacke (4, 5) gehalten ist,
**dadurch gekennzeichnet, dass**
- der wenigstens eine Bremskolben (14) und/oder das Druckstück (18) durch das in Verschieberichtung auslenkbare Federelement (20) begrenzt lösbar an der zugeordneten Bremsbacke (4, 5) angeordnet ist,
- das Federelement (20) unter Vorspannung an dem Bremskolben (14) oder einer daran angeschlossenen Druckplatte (19) anliegt, und
- die Vorspannkraft des Federelementes (20) geringer ist als die Rückstellkraft des den Bremskolben (14) betätigenden Elektromotors.

2. Scheibenbremse nach Anspruch 1, **dadurch gekennzeichnet, dass** das Federelement (20) als Klammerfeder ausgebildet ist, die sich mit einem Schenkel mittelbar oder unmittelbar an dem Bremskolben (14) abstützt und mit dem anderen Schenkel fest mit der zugeordneten Bremsbacke (4, 5) verbunden ist.

3. Scheibenbremse nach Anspruch 1 oder 2, **dadurch gekennzeichnet, dass** sich das Federelement (20) an der Druckplatte (19) oder dem Bremskolben (14) abstützt.

4. Scheibenbremse nach einem der vorhergehenden Ansprüche, **dadurch gekennzeichnet, dass** zur Begrenzung der Auslenkung des Federelementes (20) in die der Bremsscheibe (3) abgewandte Richtung ein Anschlag (25) vorgesehen ist.

5. Scheibenbremse nach Ansprüche 2 und 4, **dadurch gekennzeichnet, dass** die Klammerfeder selbst als der Anschlag (25) wirkt.

6. Scheibenbremse nach Ansprüche 2 und 4 oder 5, **dadurch gekennzeichnet, dass** ein Abstand zwischen dem Anschlag (25) und dem Druckstück (18) in Anlagestellung der Druckplatte (19) an der Bremsbacke (4, 5) einem maximal zulässigen Lüftspiel (22) entspricht.

7. Scheibenbremse nach einem der vorhergehenden Ansprüche, **dadurch gekennzeichnet, dass** das Federelement (20) aus einem Federblech gebildet ist.

8. Scheibenbremse nach Anspruch 6, **dadurch gekennzeichnet, dass** der Anschlag (25) einen Randbereich der Druckplatte (19) teilweise überdeckt.

9. Scheibenbremse nach einem der vorhergehenden Ansprüche, **dadurch gekennzeichnet, dass** ein Anschlag (12) vorgesehen ist, an dem die Bremsscheibe (3) und/oder der Bremssattel (2) unter elastischer Vorspannung im gelösten Zustand der Bremse anliegt.

## Claims

1. An electromechanically or pneumatically actuable disc brake, in particular for a commercial vehicle, having
- a brake caliper (2) which engages over a brake disc (3),
- an application device (6), which is attached to the brake caliper (2), for applying the brake by means of at least one or a plurality of brake pistons (14), which respectively bear against brake shoes (4, 5) which have brake pads (24),
- at least one electromechanically drivable adjustment device (7, 8) for adjusting an air play between the brake shoes (4, 5) and a brake disc (3),
- wherein an electric motor is operatively connected to the associated brake piston (14) for operating the adjustment device (7, 8), and
- the brake piston (14) and/or a pressure piece (18) is held at the associated brake shoe (4, 5) by a spring element (2),
**characterised in that**
- the at least one brake piston (14) and/or the pressure piece (18) is arranged so as to be releasable to a limited extent on the associated brake shoe (4, 5) by means of a spring element (20) which can deflect in the displacement direction,
- the spring element (20) abuts the brake piston (14) or a pressure plate (19) connected thereo under a preload, and
- the preload force of the spring element (20) is smaller than the restoring force of the electric motor actuating the brake piston (14).

2. Disc brake according to claim 1, **characterised in that** the spring element (20) is embodied as a clamping spring which is supported with one leg indirectly or directly against the brake piston (14) and is fixedly connected to the associated brake shoe (4, 5) with the other leg.

3. Disc brake according to claim 1 or 2, **characterised in that** the spring element (20) is supported against the pressure plate (19) or the brake piston (14).

4. Disc brake according to one of the preceding claims, **characterised in that** a stop (25) is provided for delimiting the deflection of the spring element (20) in the direction away from the brake disc (3).

5. Disc brake according to claims 2 and 4, **characterised in that** the clamping spring itself acts as the stop (25).

6. Disc brake according to claims 2 and 4 or 5, **characterised in that** a distance between the stop (25) and the pressure piece (19) when the pressure plate (19) is in contact with the brake shoe (4, 5) corresponds to a maximum permitted air play (22).

7. Disc brake according to one of the preceding claims, **characterised in that** the spring element (20) is formed of a spring steel sheet.

8. Disc brake according to claim 6, **characterised in that** the stop (25) partially covers an edge region of the pressure plate (19).

9. Disc brake according to one of the preceding claims, **characterised in that** a stop (12) is provided, against which bears the brake disc (3) and/or the brake caliper (2) under elastic preload in the released state of the brake.

## Revendications

1. Frein à disque à commande électromécanique ou pneumatique, en particulier pour un véhicule utilitaire, comprenant
- un étrier de frein (2) chevauchant un disque de frein (3),
- un moyen (6) à serrer le frein, qui est relié audit étrier de frein (2) à serrer le frein moyennant au moins un ou plusieurs pistons du frein (14), dont chacun porte à une mâchoire de frein (4, 5) respective comprenant des garnitures de frein (24),
- au moins un moyen de rattrapage (7, 8) à entraîner par voie électromécanique afin de régler un jeu d'aération entre lesdites mâchoires de frein (4, 5) et un disque de frein (3)
- dans lequel un moteur électrique se trouve en connexion fonctionnelle avec les pistons du frein (14) affectés pour commander ledit moyen de rattrapage, et
- dans lequel ledit piston du frein (14) et/ou un élément presseur (18) est/sont tenu par un élément à ressort (2) à la mâchoire de frein (4, 5) y affectée,
**caractérisé en ce**
- **que** ledit au moins un piston du frein (14) et/ou ledit élément presseur (18) est/sont disposé, pour le détachement limité, à la mâchoire de frein (4, 5) y affectée par ledit élément à ressort (20), qui est apte à être dévié en sens de déplacement,
- **que** ledit élément à ressort (20) porte, en état précontraint, audit piston du frein (14) ou à une plaque de pression (19) y raccordée, et
- en ce que l'effort de précontrainte dudit élément à ressort (20) est plus petit que l'effort de remise dudit moteur électrique commandant ledit piston du frein (14).

2. Frein à disque selon la revendication 1, **caractérisé en ce que** ledit élément à ressort (20) est configuré sous forme d'un ressort à griffes, qui s'appuie par une branche indirectement ou directement audit piston du frein (14), pendant qu'il est fixé par son autre branche, à la mâchoire de frein (4, 5) y affectée.

3. Frein à disque selon la revendication 1 ou 2, **caractérisé en ce que** ledit élément à ressort (20) s'appui à ladite plaque de pression (19) ou audit piston du frein (14).

4. Frein à disque selon une quelconque des revendications précédentes, **caractérisé en ce qu'**une butée (25) est disposée afin de limiter la déviation dudit élément à ressort (20) en un sens opposé audit disque de frein (3).

5. Frein à disque selon les revendications 2 et 4, **caractérisé en ce que** ledit ressort à griffes soi-même a l'effet de ladite butée (25).

6. Frein à disque selon les revendications 2 et 4 ou 5, **caractérisé en ce qu'**un écart entre ladite butée (25) et ledit élément presseur (18) en position d'appui de ladite plaque de pression (19) à ladite mâchoire de frein (4, 5), correspond à un jeu d'aération maximal permissible.

7. Frein à disque selon une quelconque des revendications précédentes, **caractérisé en ce que** ledit élément à ressort (20) est formé d'une tôle élastique à ressorts.

8. Frein à disque selon une quelconque des revendications précédentes, **caractérisé en ce que** ladite butée (25) chevauche, en partie, une zone marginale de ladite plaque de pression (19).

9. Frein à disque selon une quelconque des revendications précédentes, **caractérisé en ce qu'**une butée (12) est disposée, à laquelle porte ledit disque de frein (3) et/ou ledit étrier de frein (2), sous précontrainte élastique, en état desserré du frein.
